# NEUE EUROPÄISCHE PATENTSCHRIFT

(11) **EP 1 681 146 B2**
(45) Veröffentlichungstag und Bekanntmachung des Hinweises auf die Entscheidung über den Einspruch: **08.09.2010**
(45) Hinweis auf die Patenterteilung: 04.07.2007
(21) Anmeldenummer: 05023024.2
(22) Anmeldetag: 21.10.2005
(51) Int. Cl.: B27N 3/00, B27N 3/04, B27N 9/00, B27N 3/14

(54) **Verfahren zur Herstellung einer thermoplastisch gebundenen Holzwerkstoffplatte**
Method of manufacturing a board of wooden material using a thermoplastic binder
Procédé de fabrication d'une plaque en matériau de bois avec un liant thermoplastique

(30) Priorität: 14.01.2005 DE 102005001914
(43) Veröffentlichungstag der Anmeldung: 19.07.2006
(73) Patentinhaber: Steico AG, 85622 Feldkirchen (DE)
(72) Erfinder: Schramek, Udo, 81827 München (DE); Makas, Michael, Dr., 85399 Hallbergmoos (DE); Lange, Uwe, 06536 Berga (DE); Jarzebowski, Marcin, 64-600 Oborniki (PL)
(74) Vertreter: Laufhütte, Dieter

(56) Entgegenhaltungen:
- WO-A-94/16883
- DE-A1- 19 938 489
- US-A1- 2004 026 012
- US-B1- 6 322 737
- US-B1- 6 470 940
- US-B1- 6 820 350
- PATENT ABSTRACTS OF JAPAN Bd. 1995, Nr. 07, 31. August 1995 (1995-08-31) & JP 07 108511 A (MITSUI MOKUZAI KOGYO KK), 25. April 1995 (1995-04-25)

## Beschreibung

Die Erfindung betrifft ein Verfahren zur Herstellung einer thermoplastisch gebundenen Holzwerkstoffplatte.

Holzfaserplatten mittlerer Dichte, sogenannte LDF-,MDF- bzw. HDF-Platten werden nach dem bisher bekannten Stand der Technik in einem Herstellverfahren hergestellt, bei dem als Bindemittel Kondensationsharze, vor allem Harnstoff-Formaldehydharze, zum Teil auch Melamin-Formaldehydharze oder Phenol-Formaldehydharze zum Einsatz kommen. Im Bereich von Spezialanwendungen kommen auch geringere Mengen an Polyurethan-Verleimungen zum Einsatz. Hier werden Diphenylmethan-4,4'-diisocyanat MDI, Polymeres Diphenylmethan-4,4'-diisocyanat PMDI eingesetzt. Um die von den Holzfaserplatten geforderten Eigenschaften vor allem im Bezug auf die Festigkeit zu erreichen, werden bei Herstellverfahren nach dem Stand der Technik diese Bindemittel zu einem Gewichtsanteil von 25-30 Gew.% eingesetzt. Ein solch hoher Bindemitteleinsatz belastet die Wirtschaftlichkeit des Verfahrens.

Die eingesetzten Bindemittel liegen in flüssiger Form vor, um bei einer Applikation der Bindemittel auf die Faser eine möglichst homogene Verteilung der Bindemittel auf der Faser zu gewährleisten. Die Applikation der Bindemittel auf die Faser erfolgt bei diesen Prozessen durch ein Einspritzen dieser in den aus einem Refiner kommenden nassen Faserstoff. Alternativ können die Bindemittel auch über eine Mischerbeleimung oder eine Beleimung im Stromrohrtrockner auf die Faser appliziert werden. Anschließend wird der mit Bindemittel versehene Faserstoff über einen Rohrstromtrockner bis auf ca. 8-10 Gew.% Faserfeuchte getrocknet.

Durch die Applikation der Bindemittel wird zu dem im Holz enthaltenen Wasser zusätzliche Feuchtigkeit eingebracht, welche durch einen erhöhten Energiebedarf bei der Trocknung der Faserstoffe diesem wieder entzogen werden muß. Ferner werden die verwendeten Harze im Stromtrockner vorkondensiert, wobei vor allem Formaldehyd abgespalten wird. Dieses Formaldehyd wird über die Abluft der Zyklone dem Prozeß entzogen. Dabei treten bei allen zuvor genannten Harzen Probleme mit den Emissionen während der Prozessstufe der Trocknung auf. Auch die Endprodukte sind nicht emissionsfrei.

Bei der Verwendung von MDI bzw. PMDI kann zwar mit niedrigeren Bindemittelmengen im Vergleich zu Kondensationsharzen gearbeitet werden, jedoch müssen große Anstrengungen unternommen werden, die extrem toxisch wirkenden freien Monomere des MDI, welche in nicht abgebundenen MDI-Klebstoffsystemen vorhanden sind, durch aufwendige Absaugeinrichtungen dem Prozeß während des Beleimens, der Trocknung der Faser und dem Verpressen zu entziehen.

In Bezug auf die Wasserfestigkeit der Bindung kann man nur bei einer Beleimung mit MDI bzw. PMDI, oder mit Phenol- bzw. Phenolformaldehydharzen von einer wasserfesten Verleimung sprechen.

Üblicherweise benötigen hier beschriebene Bindemittelsysteme zur Herstellung von Holzfaserplatten eine Pressentemperatur von 180 bis 220 °C. Um solche Temperaturen zu erreichen, sind hohe Energiemengen notwendig, welche zu einem hohen Optimierungsgrad der Pressensysteme und der Bindemittelsysteme geführt haben. Um wirtschaftlich kurze Presszeiten zu erreichen, werden umfangreiche Anstrengungen zur Mattenvorwärmung unternommen.

Aus der DE-A-199 38 489 ist ein Verfahren bekannt, bei dem ein Faservlies aus mit Bindemittel vernetzten lignocellulosehaltigen Fasern gebildet wird, das anschließend vorverdichtet und heiß zu einem Formkörper verpresst wird.

Die Verwendung thermoplastischer Fasern in einer gepressten Holzwerkstoffplatte ist aus der US-A-2004/0026012 bekannt.

Aufgabe der Erfindung ist es, ein wirtschaftliches Verfahren zur Herstellung einer Holzwerkstoffplatte an die Hand zu geben, das möglichst emissionsfrei arbeitet. Ferner ist es Aufgabe der Erfindung, eine wasserfeste Bindung einer Holzwerkstoffplatte darzustellen, wobei ebenfalls das Endprodukt keine klebstoffbedingten Emissionen aufweist.

Erfindungsgemäß wird diese Aufgabe durch ein Verfahren nach dem Anspruch 1 gelöst. Demnach ist ein Verfahren zur Herstellung einer thermoplastisch gebundenen Holzwerkstoffplatte mit folgenden Schritten unter Schutz gestellt:
- Trocknung von lignocellulosehaltigen Fasernmittels eines Stromrohrtrockners, wobei als lignocellulosehaltige Fasern Holzfasern eingesetzt werden;
- Zumischen von thermoplastischen Fasern im trockenen Zustand;
- Abstreuen der Fasern zu einem endlosen Formstrang, wobei das Abstreuen der vorgemischten Fasern über drei hintereinander geschaltete Streumaschinen zur Bildung einer Deckschicht, einer Mittelschicht und einer weiteren Deckschicht erfolgt, wobei Deckschicht und Mittelschicht unterschidliche Gehalte an Bindemittel aufweisen;
- anschließend kalte Vorverdichtung des Faservlieses;
- Heißverpressen des Faservlieses zu einer Platte oder einem Formkörper mit einer mittleren Dichte von 150 bis 1200 kg/m³ mittels einer kontinuierlichen Presse oder durch Kalandrieren des Vlieses.

Durch das erfindungsgemäß vorgesehene Trocknen der Fasern ohne vorherige Beleimung entfällt die komplexe Problematik des Entstehens von Emissionen während des Produktionsprozesses. Die Abluft aus den Zyklonen bei diesem Verfahren besteht aus reinem Wasserdampf, welcher durch die aus dem Holz entzogene Feuchtigkeit entsteht. Ferner entfallen die typischen Emissionen des Endprodukts, da thermoplastische Bindemittel keine gesundheitsschädlichen Inhaltstoffe aufweisen, wie beispielsweise Formaldehyd oder freies Phenol.

Vorzugsweise werden bei dem erfindungsgemäßen Verfahren 1 bis 12 % Bindemittel eingesetzt. Diese im Vergleichsverfahren nach dem Stand der Technik stark herabgesetzte Bindemitteleinsatzmenge leistet einen wesentlichen Beitrag zur besonders guten Wirtschaftlichkeit des erfindungsgemäßen Verfahrens. Auch mit diesem im Vergleich zu herkömmlichen Verfahrenniedrigem Bindemittelgehalt kann eine sehr gute Wasserbeständigkeit des Werkstoffes erreicht werden.

Vorteilhaft besteht bei dem erfindungsgemäßen Verfahren auch nicht die Notwendigkeit des Absaugens der umgebenden Luft, wie sie bei der Beleimung mit MDI bzw. PMDI besteht. Die thermoplastischen Bindemittel sind frei von gesundheitsschädlichen Verbindungen, zumal hier trockene, faserförmige Bindefasern eingesetzt werden. Eine sogenannte Einhausung und Absaugung der Produktionsanlagen entfällt bei dem erfindungsgemäßen Verfahren vollständig. Erfindungsgemäß werden hier zur Holzwerkstoffplattenherstellung faserförmige thermoplastische Bindemittel eingesetzt. Die trockenen Holzfasern werden mit trockenen Bindemittelfasern gemischt und es wird eine weitgehend homogene Mischung erzeugt. Eine aufwendige Beleimung des Faserstoffs über die einem Refiner nachgeschaltete Blowline, einem Mischer oder einer Stromrohrbeleimung entfällt vollständig. Weiterhin entfällt auch eine aufwendige Aufbereitung der Leime.

Das homogene Holzfaser-Bindemittelfasergemisch wird erfindungsgemäß einfach nur aufgestreut, wobei ein Aufstreuen auf ein Förderband erfolgt. Gewöhnlich wird ein mit Harz beaufschlagter Faserstoff gestreut, bei welchem das Bindemittel auf die Faser appliziert wurde. Beim erfindungsgemäßen Verfahren wird dagegen die Mischung aus Holzfasern und Bindemittelfasern gestreut, bei welcher zunächst keine Verbindung der Holzfaser mit dem Bindemittel vorliegt. Die Bindung zur Platte erfolgt in einer der kalten Vorpresse nachgeschalteten Heißpresse, in welcher der Thermoplast schmirzt und eine innigliche Verbindung mit den Holzfasern herbeigeführt wird, wodurch der geformte Faserstoff zur Platte oder zu einem Formkörper verbunden wird. Die Thermoplaste benötigen lediglich eine Schmelztemperatur von 130 bis 160 °C. Das führt also zu niedrigeren Pressentemperaturen und zur Einsparung von Energie, wodurch weiterhin die Wirtschaftlichkeit des erfindungsgemäßen Verfahrens unterstützt wird.

Weitere vorteilhafte Ausgestaltungen des Verfahrens ergeben sich aus den sich an den Hauptanspruch anschließenden Unteransprüchen.

Demnach werden als lignocellulosehaltige Fasern Holzfasern eingesetzt.

Bevorzugt werden die lignocellulosehaltigen Fasern mit Flammschutzmitteln und /oder Hydrophobierungsmitteln beaufschlagt.

Das Trocknen der Holzfasern erfolgt mittels eines Stromrohrtrockners.

Das Aufstreuen der vorgemischten Fasern erfolgt über drei hintereinander geschaltete Streumaschinen zur Bildung einer Deckschicht, einer Mittelschicht und einer weiteren Deckschicht.

Vorteilhaft können die Pressflächen zum Pressen des Faservlieses mit einem Trennmittel beschichtet sein.

Besonders vorteilhaft ist es, dass die Platte oder der Formkörper nach dem Heißverpressen gekühlt wird.

Das Kühlen erfolgt vorteilhaft über eine nachgeschaltete gekühlte Presse oder einen gekühlten Kalander.

Das Kühlen kann auch über eine in die Heißpresse integrierte Kühlzone bzw. einem Kühltakt erfolgen.

Die kontinuierlich hergestellte Platte kann formatiert und zu Einzelplatten aufgetrennt werden. Die Platte bzw. das Formteil kann abschließend konfektioniert werden. Ein weiterer Vorteil der Platten besteht darin, dass sie später noch nachverformbar sind.

Das Verfahren wird derart durchgeführt, dass eine Dicke von 0,5 bis 80 mm, besonders vorzugsweise von 1 bis 60 mm erreicht wird.

Die thermoplastischen Fasern bestehen gemäß einer besonders vorteilhaften Ausgestaltung der Erfindung aus Polyethylen und/oder Polypropylen.

Erfindungsgemäß sind gemäß der Erfindung höchstens 15 Gew.-% thermoplastischer Fasern beigemengt werden, um eine Platte bzw. einen Formkörper mit guten Festigkeitseigenschaften zu erhalten.

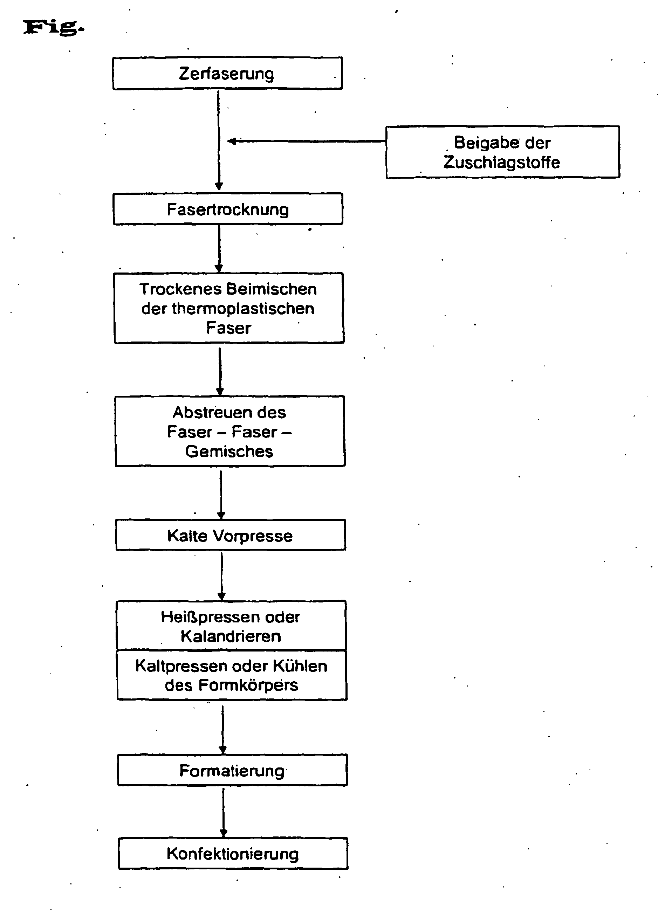

Weitere Merkmale, Einzelheiten und Vorteile der Erfindung ergeben sich aus einem bevorzugten Ausführungsbeispiel, das anhand der beigefügten Figur näher erläutert wird. Die einzige Figur zeigt schematisch den Verfahrensablauf einer besonders vorteilhaften Verfahrensführung gemäß der vorliegenden Erfindung.

In einem ersten Verfahrensschritt werden als lignocellulosehaltige Fasern Holzfasern durch entsprechende Zerfaserung hergestellt. Diese Holzfasern können mit Flammschutzmitteln und/ oder Hydrophobierungsmitteln, die als Zuschlagstoffe beigegeben werden, beaufschlagt werden. Die entsprechend beaufschlagten Fasern werden in einem Stromrohrtrockner getrocknet. Die entsprechend getrockneten präparierten Holzfasern werden in einem nächsten Verfahrensschritt mit thermoplastischen Fasern, vorzugsweise Fasern aus Polyethylen und/oder Polypropylen trocken vermischt. Anstelle von Polyethylen und/oder Polypropylen können auch thermoplastische Polymere oder CO-Polymere verwendet werden.

Die entsprechend gemischten Holzfasern und Bindemittelfasern werden anschließend zu einem endlosen Formstrang in einer Streustation abgestreut. Das Abstreuen erfolgt auf einem Förderband, das den endlosen Formstrang zu den nächsten Verfahrensstationen weitertransportiert.

Der mehrschichtig abgestreute Formstrang wird anschließend einer kalten Vorverdichtung des Faservlieses zugeführt, wo eine erste Verdichtung des Faservlieses erfolgt.

Anschließend wird das Faservlies zu einer Platte mittels einer Presse heißverpresst. Alternativ kann hier das Vlies kalandriert werden. Anschließend wird der entsprechend heißverpresste Körper, bei dem die Temperatur so gewählt wird, dass der Thermoplast zerfließt und die Holzwerkstoffplatte bindet, kaltgepresst oder gekühlt, wodurch die Platte verfestigt wird. Schließlich folgt ein Formatieren und Konfektionieren der Platte zu Einzelplatten.

## Patentansprüche

1. Verfahren zur Herstellung einer thermoplastisch gebundenen Holzwerkstoffplatte mit folgenden Schritten:
- Trocknung von lignocellulosehaltigen Fasernmittels eines Stromrohrtrockners, wobei als lignocellulosehaltige Fasern Holzfasern eingesetzt weden;
- Zumischen von höchstens 15 Gew-% thermoplastischen Fasern im trockenen Zustand;
- Abstreuen der Fasern zu einem endlosen Formstrang, wobeidas Abstreuen der vorgemischten Fasern über drei hintereinander geschaltete Streumaschinen zur Bildung einer Deckschicht, einer Mittelschicht und einer weiteren Deckschicht erfolgt, wobei Deckschicht und Mittelschicht unterschiedliche Gehalte an Bindemittel aufweisen,
- anschließend kalte Vorverdichtung des Faservlieses;
- Heißverpressen des Faservlieses zu einer Platte oder einem Formkörper mit einer mittleren Dichte von 150 bis 1200 kg/m³ mittels einer kontinuierlichen Presse oder durch Kalandrieren des Vlieses,

2. Verfahren nach Anspruch 1, **dadurch gekennzeichnet, dass** die lignocellulosehaltigen Fasern mit Flammschutzmitteln und/ oder Hydrophobierungsmitteln beaufschlagt werden.

3. Verfahren nach einem der Ansprüche 1 oder 2, **dadurch gekennzeichnet, dass** in der Deckschicht und Mittelschicht abweichende Bindemittel enthalten sind.

4. Verfahren nach einem der Ansprüche 1 bis 3, **dadurch gekennzeichnet, dass** die Pressflächen zum Pressen des Faservlieses mit einem Trennmittel beschichtet sind.

5. Verfahren nach einem der Ansprüche 1 bis 4, **dadurch gekennzeichnet, dass** die Platte oder der Formkörper nach dem Heißverpressen gekühlt wird.

6. Verfahren nach Anspruch 5, **dadurch gekennzeichnet, dass** das Kühlen über eine nachgeschaltete gekühlte Presse oder über einen gekühlten Kalander oder über einen Kühltakt erfolgt.

7. Verfahren nach Anspruch 6, **dadurch gekennzeichnet, dass** das Kühlen über eine in die Heißpresse integrierte Kühlzone erfolgt.

8. Verfahren nach einem der Ansprüche 1 bis 7, **dadurch gekennzeichnet, dass** die hergestellte Platte formatiert und zu Einzelplatten aufgetrennt wird.

9. Verfahren nach einem der Ansprüche 1 bis 8, **dadurch gekennzeichnet, dass** die hergestellte Platte heiß nachverformt wird.

10. Verfahren nach einem der Ansprüche 1 bis 9, **dadurch gekennzeichnet, dass** die Platte bzw. das Formteil abschließend konfektioniert wird.

11. Verfahren nach Anspruch 10, **dadurch gekennzeichnet, dass** die Holzwerkstoffplatte eine Dicke von 0,5 bis 80 mm, vorzugsweise 1 bis 60 mm, aufweist.

12. Verfahren nach einem der vorangehenden Ansprüche, **dadurch gekennzeichnet, dass** Fasern aus Polyethylen und/oder Polypropylen als thermoplastische Fasern eingesetzt werden.

## Claims

1. Process for the production of a thermoplastically bonded wood-base material board comprising the following steps:
- drying of lignocellulose-containing fibres by means of a flash tube dryer, the lignocellulose-containing fibres used being wood fibres;
- admixing of not more than 15% by weight of thermoplastic fibres in the dry state;
- scattering of the fibres to give a continuous shaped strand, the scattering of the premixed fibres being effected by means of three scattering machines, connected in series, for the formation of an outer layer, a middle layer and a further outer layer, outer layer and middle layer having different contents of binder;
- followed by cold precompaction of the fibre web;
- hot pressing of the fibre web to give a board or a moulding having a mean density of 150 to 1200 kg/m³ by means of a continuous press or by calendering the web.

2. Process according to Claim 1, **characterized in that** the lignocellulose-containing fibres are treated with flameproofing agents and/or water repellents.

3. Process according to either of Claims 1 and 2, **characterized in that** different binders are present in the outer layer and middle layer.

4. Process according to any of Claims 1 to 3, **characterized in that** the pressing surfaces for pressing the fibre web are coated with a release agent.

5. Process according to any of Claims 1 to 4, **characterized in that** the board or the moulding is cooled after the hot pressing.

6. Process according to Claim 5, **characterized in that** the cooling is effected by means of a downstream cooled press or by means of a cooled calender or by means of a cooling cycle.

7. Process according to Claim 6, **characterized in that** the cooling is effected by means of a cooling zone integrated in the hot press.

8. Process according to any of Claims 1 to 7, **characterized in that** the board produced is brought to the desired size and cut into individual boards.

9. Process according to any of Claims 1 to 8, **characterized in that** the board produced is subjected to hot post-forming.

10. Process according to any of Claims 1 to 9, **characterized in that**, in a final step, the board or the shaped article is assembled.

11. Process according to Claim 10, **characterized in that** the wood-base material board has a thickness of 0.5 to 80 mm, preferably 1 to 60 mm.

12. Process according to any of the preceding claims, **characterized in that** fibres of polyethylene and/or polypropylene are used as thermoplastic fibres.

## Revendications

1. Procédé de fabrication d'une plaque en matériau de bois avec un liant thermoplastique avec les étapes suivantes:
- séchage de fibres contenant de la cellulose ligneuse au moyen d'un séchoir à courant brut, où sont utilisées comme fibres contenant de la cellulose ligneuse des fibres de bois;
- ajout d'au maximum 15% en poids de fibres thermoplastiques à l'état sec;
- dispersion des fibres en une corde sans fin, où la dispersion des fibres prémélangées se produit au moyen de trois machines de dispersion disposées les unes derrière les autres pour la formation d'une couche de recouvrement, d'une couche médiane et d'une autre couche de recouvrement, où la couche de recouvrement et la couche médiane présentent des teneurs différentes en un agent liant,
- suivie d'une prédensification à froid de la nappe de fibres;
- compression à chaud de la nappe de fibres en une plaque ou un corps en forme avec une densité moyenne de 150 à 1200 kg/m³ au moyen d'une presse continue ou bien par calandrage de la nappe.

2. Procédé selon la revendication 1, **caractérisé en ce que** les fibres contenant de la cellulose ligneuse sont chargées d'agents ignifuges et/ou d'agents rendant hydrophobe.

3. Procédé selon l'une des revendications 1 ou 2, **caractérisé en ce que** dans la couche de recouvrement et la couche médiane sont contenus des agents liants différents.

4. Procédé selon l'une des revendications 1 à 3, **caractérisé en ce que** les surfaces de pression pour la compression de la nappe de fibres sont enduites d'un agent de séparation.

5. Procédé selon l'une des revendications 1 à 4, **caractérisé en ce que** la plaque ou le corps en forme est refroidi après la compression à chaud.

6. Procédé selon la revendication 5, **caractérisé en ce que** le refroidissement se fait au moyen d'une presse refroidie commutée en aval ou au moyen d'une calandre refroidie ou bien au moyen d'un cycle de refroidissement.

7. Procédé selon la revendication 6, **caractérisé en ce que** le refroidissement a lieu par une zone de refroidissement intégrée dans la presse chaude.

8. Procédé selon l'une quelconque des revendications 1 à 7, **caractérisé en ce que** la plaque produite est mise au format et est séparée en plaques individuelles.

9. Procédé selon l'une des revendications 1 à 8, **caractérisé en ce que** la plaque produite est post-formée à chaud.

10. Procédé selon l'une des revendications 1 à 9, **caractérisé en ce que** la plaque respectivement la pièce en forme est subséquemment confectionnée.

11. Procédé selon la revendication 10, **caractérisé en ce que** la plaque en matériau de bois présente une épaisseur de 0,5 à 80 mm, de préférence de 1 à 60 mm.

12. Procédé selon l'une des revendications précédentes, **caractérisé en ce que** des fibres en polyéthylène et/ou en polypropylène sont utilisées en tant que fibres thermoplastiques.
